(19) Europäisches Patentamt
European Patent Office
Office européen des brevets

(11) **EP 2 647 090 B1**

(12) **EUROPÄISCHE PATENTSCHRIFT**

(45) Veröffentlichungstag und Bekanntmachung des Hinweises auf die Patenterteilung:
**16.06.2021 Patentblatt 2021/24**

(21) Anmeldenummer: **11802270.6**

(22) Anmeldetag: **25.11.2011**

(51) Int Cl.:
***H01S 3/067*** (2006.01)    ***H01S 3/00*** (2006.01)
***H01S 3/23*** (2006.01)

(86) Internationale Anmeldenummer:
**PCT/EP2011/005935**

(87) Internationale Veröffentlichungsnummer:
**WO 2012/072217 (07.06.2012 Gazette 2012/23)**

(54) **FASERVERSTÄRKERSYSTEM**

FIBER AMPLIFIER SYSTEM

SYSTÈME D'AMPLIFICATION À FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2010 DE 102010052907**

(43) Veröffentlichungstag der Anmeldung:
**09.10.2013 Patentblatt 2013/41**

(73) Patentinhaber:
• **Fraunhofer-Gesellschaft zur Förderung der angewandten Forschung e.V.**
**80686 München (DE)**
• **Friedrich-Schiller-Universität Jena**
**07743 Jena (DE)**

(72) Erfinder:
• **NODOP, Dirk**
**07749 Jena (DE)**
• **LIMPERT, Jens**
**07751 Jena (DE)**
• **TÜNNERMANN, Andreas**
**99425 Weimar (DE)**

(74) Vertreter: **Isfort, Olaf**
**Schneiders & Behrendt PartmbB**
**Rechts- und Patentanwälte**
**Huestraße 23**
**(Kortumkarree)**
**44787 Bochum (DE)**

(56) Entgegenhaltungen:
CA-A1- 2 318 675        US-A1- 2009 010 288
US-A1- 2010 193 769     US-B1- 7 539 231

**Beschreibung**

Die Erfindung betrifft ein Faserverstärkersystem zur Verstärkung und Emission gepulster Strahlung, aufweisend eine Masterquelle, die gepulste Ausgangsstrahlung emittiert, und mindestens eine in Strahlrichtung hinter der Masterquelle angeordnete Verstärkerstufe, die die Ausgangsstrahlung verstärkt.

Faserverstärkersysteme dieser Art, sog. Master-Oszillator-Verstärkersysteme (MOPA), mit flexiblen Pulsformen im Nanosekundenbereich stellen attraktive Quellen für sowohl industrielle als auch wissenschaftliche Anwendungen dar. Unter anderem sind solche Systeme von Interesse, bei welchen mittels einer Masterquelle alle Parameter wie Repetitionsrate, Pulsform, Pulsenergie und Pulsdauer beeinflusst werden können. Dies eröffnet ein ausgesprochen breites Anwendungsfeld. In der Mikromaterialbearbeitung können die Laserparameter jeweils an das zu bearbeitende Material oder die gewünschte Bearbeitungstechnik, wie beispielsweise Bohren, Schweißen, Ablatieren oder Trepanieren, angepasst werden. Faserbasierte Systeme sind zudem dadurch besonders interessant, dass sie integriert-optisch und justagefrei aufgebaut werden und hohe Durchschnittsleistung liefern können. Auch bei der Erzeugung von EUV-Strahlung ist ein Faserverstärkersystem der eingangs genannten Art von großem Interesse.

Üblicherweise besteht ein faserbasiertes Master-Oszillator-Verstärkersystem (MOPA) aus einer Masterquelle und mehreren nachfolgenden Verstärkerstufen auf Basis Seltenerd-dotierter Fasern. Zwischen der Masterquelle und der nachfolgenden Verstärkerstufe, bzw. zwischen den aufeinander folgenden Verstärkerstufen kann jeweils ein filterndes Element angeordnet sein, welches beispielsweise ein Spektralfilter oder ein Polarisationsfilter ist.

Um beliebige Pulsformen erzeugen zu können, wird als Masterquelle im Stand der Technik meist eine fasergekoppelte Fabry-Perot-Laserdiode verwendet. Eine solche Fabry-Perot-Laserdiode verfügt über eine näherungsweise lineare Strom-Leistungs-Kennlinie, bei gleichzeitig ausreichend schnellen Anstiegs- und Abklingzeiten. Mit Hilfe eines Funktionsgenerators und einer Treiberelektronik kann so jede beliebige Pulsform erzeugt werden.

Problematisch bei Laserdioden dieses Typs ist die Ausbildung extrem schmalbandiger, isolierter Linien im Emissionsspektrum, wenn die Laserdiode mit einem langsam ansteigenden Puls angesteuert wird. Bei diesen schmalbandigen Linien handelt es sich um einzelne Longitudinalmoden, die bei ansteigendem Pumpstrom isoliert über die Laserschwelle gelangen und aufgrund von Gain-Competition das Spektrum dominieren. Durch die nachfolgende Verstärkerstufe werden diese Longitudinalmoden zu Pulsen mit sehr hoher spektraler Intensität verstärkt. Das führt ab einer bestimmten Pulsspitzenleistung zu stimulierter Brillouin-Streuung (SBS). Da die stimulierte Brillouin-Streuung entgegen der Propagationsrichtung des Laserpulses verläuft, geht der rückgestreute Anteil dem Ausgangspuls verloren. Hierdurch wird der resultierende Ausgangspuls in seiner zeitlichen Form verzerrt. Ebenfalls kann der rückgestreute Anteil derart hohe Leistungen erreichen, dass es zu Beschädigungen des Verstärkersystems kommt. Somit ist die stimulierte Brillouin-Streuung der limitierende Faktor bei der Steigerung der Pulsenergie in faserbasierten MOPA-Systemen.

Stimulierte Brillouin-Streuung tritt als nichtlinearer Effekt auf, wenn es zu inelastischen Wechselwirkungen zwischen Photonen und akustischen Phononen des Fasermaterials kommt. Die Energie der akustischen Phononen reduziert die Energie der Pumpphotonen, was zu einer Verschiebung der optischen Frequenzen der Ausgangsstrahlung im rückgestreuten Anteil führt. Die Verstärkung der Brillouin-Streuung steigt dabei exponentiell mit der Länge der Faser, wohingegen der Verstärkungskoeffizient vom Material der Faser, der Fasergeometrie und der Fasertemperatur abhängt. Die kritische Leistung $P_{cr}$, ab welcher Brillouin-Streuung in einer Glasfaser einsetzt, lässt sich mit folgender Formel abschätzen:

$$P_{cr} =\sim 21 A_{eff}(1+\Delta\upsilon_S/\Delta\upsilon_{Br})/g_{Br}L_{eff}$$

Hierbei ist $A_{eff}$ die effektive Modenfläche, $\Delta\upsilon_S$ die Bandbreite der Ausgangsstrahlung, $\Delta\upsilon_{Br}$ die Bandbreite der stimulierten Brillouin-Streuung, $g_{Br}$ der Verstärkungskoeffizient und $L_{eff}$ die effektive Länge der Faser.

Die Gleichung zeigt, dass die kritische Leistung, ab welcher stimulierte Brillouin-Streuung auftritt, proportional zum Verhältnis der Bandreite der Ausgangsstrahlung $\Delta\upsilon_S$ und der Bandbreite der stimulierten Brillouin-Streuung $\Delta\upsilon_{Br}$ ist. Dabei hängt die Bandbreite $\Delta\upsilon_{Br}$ von der Lebensdauer der akustischen Phononen ab und beträgt bei Quarzglas und einer Wellenlänge von ungefähr 1 $\mu$m etwa 10-20 MHz. Die spektrale Bandbreite $\Delta\upsilon_S$ eines spektral transformlimitierten Gaußpulses mit beispielsweise 50 ns Pulsdauer beträgt ungefähr 1,8 MHz. Dieser Wert liegt deutlich unterhalb der Bandbreite der stimulierten Brillouin-Streuung $\Delta\upsilon_{Br}$ und führt damit zu einer sehr niedrigen kritischen Leistung $P_{cr}$. Dagegen würde eine spektrale Bandbreite der Ausgangsstrahlung $\Delta\upsilon_S$ von 1 THz - dies entspricht ungefähr 4 nm Bandbreite bei 1 $\mu$m Wellenlänge - die kritische Leistung $P_{cr}$ im Vergleich um etwa 5 Größenordnungen erhöhen. Hierdurch wird der Vorteil der Verwendung einer spektral breitbandigen Masterquelle für Faserverstärker hoher Leistung deutlich.

Im Stand der Technik werden daher Masterquellen verwendet, deren Bandbreite des zu verstärkenden Signals so groß gewählt wird, dass die kritische Leistung ausreichend groß wird, um für die jeweiligen Leistungsparameter stimulierte Brillouin-Streuung zu unterdrücken.

Für die Anwendung bei einem faserbasierten MOPA-System ergeben sich jedoch dadurch Probleme, dass zumeist eine gepulste Fabry-Perot-Laserdiode als Masterquelle verwendet wird, deren spektrale Bandbreite von der Pulsform, Pulsdauer, Pulsleistung und Repetitionsrate abhängt. Wie zuvor beschrieben, kommt es bei ansteigendem Pumpstrom zur Ausbildung extrem schmalbandiger, isolierter Linien im Emissionsspektrum und somit zur Entstehung stimulierter Brillouin-Streuung.

Des Weiteren existieren im Stand der Technik Ansätze, welche beispielsweise die Geometrie der Faser, die Materialzusammensetzung, die Temperatur oder die mechanische Spannung innerhalb der Faser so ändern, dass sich gleichzeitig die Resonanzbedingung über die Gesamtlänge der Faser ändert. Dies verhindert die Ausbildung dominierender Moden, da jedes Teilstück der Faser eine andere Frequenz verstärkt und damit die Verstärkung bezogen auf eine bestimmte Frequenz gering bleibt. Die hierdurch erreichte Erhöhung der Schwelle für stimulierte Brillouin-Streuung ist dennoch für viele Anwendungen nicht ausreichend.

Eine weitere bekannte Methode besteht darin, dem Signal der Masterquelle mittels eines Phasenmodulators eine zeitlich modulierte Phase aufzuprägen, die im Frequenzraum zu Seitenbändern und damit zu einer effektiven Verbreiterung des Spektrums führt. Ein Phasenmodulator in Kombination mit einer existierenden gepulsten Masterquelle ist jedoch sehr aufwendig

Ein Faserverstärkersystem beinhaltend eine LED und einen Faserverstärker zur Erzeugung einer einfach durchstimmbaren inkohärenten Lichtquelle ist z. B. aus der CA 2318675 A1 bekannt.

Damit haben die im Stand der Technik bekannten Konzepte den Nachteil, konstruktiv aufwendig und teuer zu sein bzw. keine ausreichende Erhöhung der Schwelle für Brillouin-Streuung zu erreichen.

Es ist daher Aufgabe der Erfindung, ein Faserverstärkersystem zur Verstärkung und Emission gepulster Strahlung zu schaffen, welches stimulierte Brillouin-Streuung möglichst effektiv vermeidet und gleichzeitig einfach und kostengünstig herzustellen ist

Die Aufgabenstellung der vorliegenden Erfindung wird durch ein System und ein Verfahren wie definiert in den unabhängigen Ansprüchen gelöst. Vorteilhafte Ausführungsformen finden sich in den abhängigen Ansprüchen.

Zur Lösung dieser Aufgabe schlägt die vorliegende Erfindung ausgehend von einem Faserverstärkersystem der eingangs genannten Art vor, dass dass die von der Masterquelle emittierte Ausgangsstrahlung breitbandig und im Wesentlichen durch spontane Emission erzeugt ist.

Breitbandig im Sinne dieser Erfindung ist eine Ausgangsstrahlung, welche nicht nur einige wenige Wellenlängen emittiert. Bei einer Zentralwellenlänge von 1045 nm trifft dies z.B. auf eine spektrale Bandbreite von ungefähr 4 nm zu (= ungefähr 1 THz). Die spektrale Bandbreite ist im Bereich von 10 nm (= ungefähr 2,5 THz).

Erfindungswesentlich ist, dass die Ausgangsstrahlung durch spontane Emission erzeugt wird. Hierdurch entfallen die im Stand der Technik bekannten Probleme durch einzelne Longitudinalmoden hoher Intensität, welche innerhalb der Verstärkerstufen stimulierte Brillouin-Streuung hervorrufen.

Die Masterquelle ist eine LED, deren Endfacetten eine Antireflexbeschichtung aufweisen. Bauteile dieser Art werden im Folgenden als Superlumineszenzdioden (SLD) bezeichnet. Sie sind günstige und robuste Bauelemente, verfügen über eine näherungsweise lineare Strom-Leistungskennlinie und erzeugen ein breitbandiges Spektrum. Zudem besitzen Superlumineszenzdioden die Einkoppeleigenschaften eines Lasers. Sie verfügen im Gegensatz zum Laser aber nicht über einen dedizierten Resonator und haben folglich eine geringe Kohärenzlänge. Somit wird die Ausbildung extrem schmalbandiger Longitudinalmoden im Emissionsspektrum wirksam verhindert.

Eine Superlumineszenzdiode ist praktisch baugleich mit einer Fabry-Perot-Diode. Während jedoch die Fabry-Perot-Diode die Fresnelreflektion der Endfacette des aktiven Halbleiterschichtsystems nutzt, um mit einer hochreflektierenden Schicht auf der gegenüberliegenden Facette einen Resonator zu bilden, sind bei der Superlumineszenzdiode die Endfacetten mit einer Antireflexschicht versehen oder gegenüber der Propagationsrichtung des Laserpulses verkippt. Diese Ausbildung führt zu einer Unterdrückung optischer Rückkopplung und verhindert damit das Einsetzen von Laseremission mit der beschriebenen Ausformung von einzelnen Longitudinalmoden. Aufgrund der hohen Kleinsignalverstärkung im aktiven Halbleiterschichtsystem der Superlumineszenzdiode wird die spontane Emission verstärkt und verlässt aufgrund der Wellenleitereigenschaften des Halbleiterschichtsystems die Superlumineszenzdiode als beugungsbegrenzter Strahl, dessen Spektrum nur durch die Verstärkungsbandbreite des Halbleiterschichtsystems und den Effekt des Gain Narrowings bestimmt wird. Aufgrund der anisotropen Struktur des Halbleiterschichtsystems ist das emittierte Licht linear polarisiert und kann in eine polarisationserhaltende Single Mode Faser eingekoppelt werden.

Für die Anwendung als Masterquelle in einem MOPA-System kann beispielsweise eine Superlumineszenzdiode mit einer spektralen Bandbreite von 10 nm bei einer Zentralwellenlänge von 1045 nm eingesetzt werden. Dies entspricht einer Bandbreite von etwa 2,5 THz. Die zugehörige Spitzenleistung von 150 mW liegt dabei in derselben Größenordnung vergleichbarer Fabry-Perot-Laserdioden. Die Form des Spektrums ist praktisch unabhängig von der Pulsdauer, der Pulsform und der Repetitionsrate. Mit der genannten spektralen Bandbreite von etwa 2,5 THz ist in jedem Fall eine ausreichende Erhöhung der Brillouin-Streuungs-Schwelle gewährleistet.

Durch die Erfindung sind sehr einfache, faserbasierte MOPA-Systeme realisierbar. Aufgrund der extrem kleinen Finesse der Superlumineszenzdiode ist die Photonenlebensdauer praktisch gleich der Dauer des Einfachdurchgangs durch den aktiven Bereich der Superlumineszenzdiode, so dass es aufgrund der fehlenden Rückkopplung keine Resonatordynamik gibt. In Verbindung mit einer schnellen Ansteuerelektronik sind damit beliebige Pulsformen vom Sub-Nanosekunden-Bereich bis zum Dauerstrichbetrieb möglich, womit eine Superlumineszenzdiode im Zeitbereich einen hoch dynamischen Synthesizer darstellt.

Als Diode kommen im Rahmen der Erfindung alle Bauformen von Licht emittierenden Halbleiterstrukturen, wie z.B. Kantenemitter, Oberflächenemitter, Trapezstrukturen, gewinngeführte und indexgeführte Strukturen, in Betracht. Ebenso können sowohl direkte als auch indirekte Halbleiter Anwendung finden.

Vorteilhaft weisen die Endfacetten der Superlumineszenzdiode, wie oben erläutert, eine Antireflexbeschichtung auf. Alternativ können die Flächennormalen der Endfacetten gegenüber der Strahlrichtung einen von 0° abweichenden Winkel aufweisen. Hierdurch wird Reflektion unterdrückt, so dass das Einsetzen von Laseremission verhindert wird. Somit kommt es innerhalb der Diode lediglich zu spontaner Emission, wodurch die Kohärenzlänge gering ist.

Erfindungsgemäß kann vor und/oder hinter der mindestens einen Verstärkerstufe ein filterndes Element angeordnet sein. Dieses ist vorzugsweise ein Spektralfilter oder ein Polarisationsfilter. Als Spektralfilter kommen insbesondere Bandpassfilter in Betracht, welche das Spektrum in der gewünschten Bandbreite anpassen, bzw. unerwünschte verstärkte Spontanemission herausfiltern. Außerdem kommen Polarisationsfilter und optische Isolatoren in Betracht. Alle Filter können anwendungsspezifisch ausgelegt werden und/oder durchstimmbar sein.

Alternativ kann das Faserverstärkersystem so ausgebildet sein, dass die Verstärkerstufe mehrmals von der Strahlung durchlaufen wird, um den Verstärkungsfaktor zu erhöhen. Dies wird vorteilhaft dadurch erreicht, dass vor der Verstärkerstufe ein Zirkulator angeordnet ist, welchem in Strahlrichtung hinter der Verstärkerstufe ein Spektralgitter zugeordnet ist. Das Spektralgitter kann dabei insbesondere ein Faser-Bragg-Gitter, ein langperiodisches Gitter oder ein durchstimmbares Gitter sein. Diese Ausführungsvariante mit einem Zirkulator und einem Spektralgitter hat den Vorteil, dass die Verstärkerstufe im Doppelpass arbeitet, d.h. zweimal durchlaufen wird, und somit wesentlich mehr Verstärkung liefert. Mit Hilfe des Spektralgitters lässt sich das optische Spektrum zudem anwendungsspezifisch beeinflussen.

Vorteilhaft ist, dass eine, mehrere oder alle Verstärkerstufen Wellenleiter sind. Insbesondere bieten sich hierbei faseroptische Verstärkerstufen an, da diese optimal in ein faserbasiertes Verstärkersystem einzubringen sind und somit den sonst üblichen Justageaufwand erheblich verringern.

Alternativ kann die Verstärkerstufe, oder mehrere oder alle Verstärkerstufen, ein volumenoptisches Element sein. Die volumenoptischen Elemente können dabei mit Medien im festen, flüssigen oder gasförmigen Zuständen arbeiten, die optisch, elektrisch oder chemisch gepumpt werden.

Neben dem erfindungsgemäßen Faserverstärkersystem betrifft die Erfindung ein Verfahren zur Verstärkung und Emission gepulster Laserstrahlung, bei welchem die gepulste Ausgangsstrahlung einer Masterquelle mittels mindestens einer Verstärkerstufe verstärkt wird, wobei die Masterquelle eine breitbandige, durch spontane Emission erzeugte Ausgangsstrahlung emittiert.

Insbesondere lässt sich das Faserverstärkersystem so ausbilden, dass es für die nichtlineare Frequenzkonversion optimiert ist.

Ausführungsbeispiele der Erfindung werden im Folgenden anhand der Figuren näher erläutert. Es zeigen:

Figur 1: erfindungsgemäßes Faserverstärkersystem mit optischem Filter,

Figur 2: erfindungsgemäßes Faserverstärkersystem mit optischem Zirkulator und FaserBragg-Gitter,

Figur 3: erfindungsgemäßes Faserverstärkersystem mit optischem Zirkulator und externem, durchstimmbarem, optischen Gitter,

Figur 4: Aufbau einer erfindungsgemäß eingesetzten Superlumineszenzdiode,

Figur 5: Spektren der Ausgangsstrahlung einer Superlumineszenzdiode bei unterschiedlichen Pulsformen, Repetitionsraten und Pulsdauern.

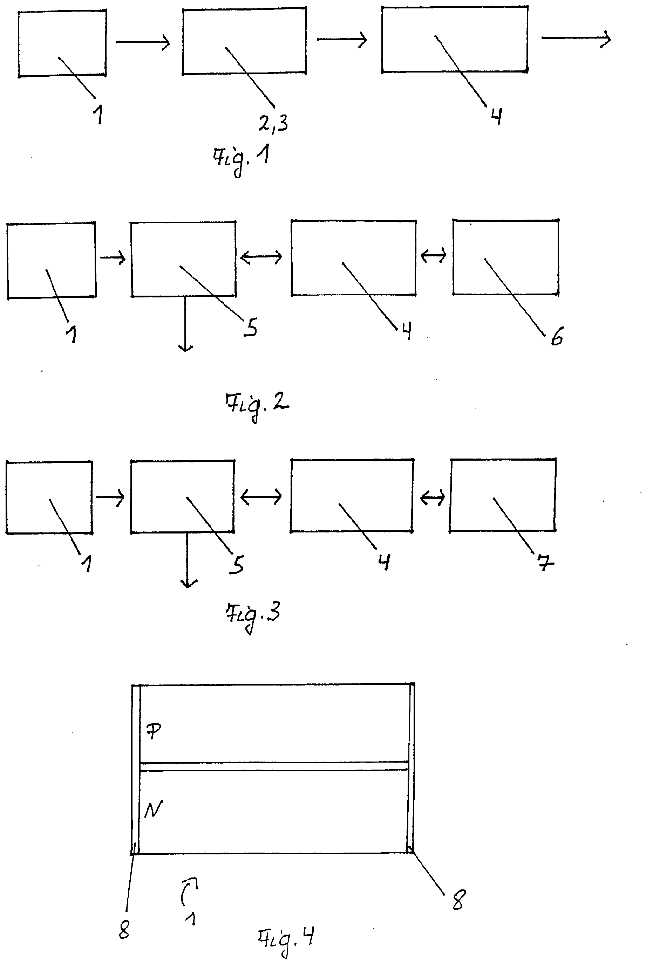

Das Faserverstärkersystem gemäß Figur 1 besteht aus einer Superlumineszenzdiode 1 als Masterquelle, einem Polarisationsfilter 2 und/oder einem Spektralfilter 3 und einem optischen Verstärker 4. Ein solcher Aufbau ließe sich beispielsweise vollständig durch faserintegrierte Isolatoren 2, Bandpassfilter 3 und Faserstärker 4 realisieren. Der Aufbau lässt sich dabei mit mehreren aufeinander folgenden Stufen von Isolatoren 2 / Bandpassfiltern 3 und optischen Verstärkern 4 (nicht dargestellt) erweitern. Mit den Bandpassfiltern 3 kann das Spektrum in der gewünschten Bandbreite angepasst werden und eine unerwünschte verstärkte Spontanemission herausgefiltert werden.

Der Aufbau gemäß Figur 2 weist eine Superlumineszenzdiode 1, einen Zirkulator 5, einen Faserstärker 4 und ein Faser-Bragg-Gitter 6 auf. Die alternative Ausführungsform gemäß Figur 3 zeigt ebenfalls einen Aufbau aus Superlumineszenzdiode 1, Zirkulator 5 und Faserverstärker 4, wobei hinter dem Faserverstärker 4 ein durchstimmbares Gitter 7 angeordnet ist. Die Ausführungsformen gemäß den Figuren 2 und 3 haben den Vorteil, dass der Faserverstärker von der propagierenden Strahlung zweimal durchlaufen wird, so dass sich die resultierende Verstärkung der propagierenden Strahlung deutlich erhöht.

Figur 4 zeigt das Halbleiterschichtsystem einer Superlumineszenzdiode 1. Die beiden Endfacetten 8 der Superlumineszenzdiode 1 sind mit einer Antireflexschicht (Reflektionsgrad 0%) beschichtet.

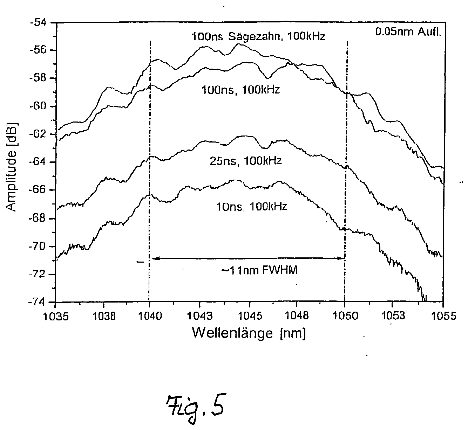

Figur 5 zeigt ein Emissionsspektrum einer erfindungsgemäßen Superlumineszenzdiode 1 bei unterschiedlichen Pulsformen, Repetitionsraten und Pulsdauern. Wie zu sehen, ist die Form des Emissionsspektrums, und insbesondere die spektrale Bandbreite, praktisch unabhängig von der Pulsdauer, Pulsform und Repetitionsrate der Superlumineszenzdiode 1.

Die Anordnung gemäß Figur 1 funktioniert so, dass die Superlumineszenzdiode 1 beispielsweise Ausgangspulse mit einem Emissionsspektrum gemäß Figur 5 emittiert. Die Pulse verfügen dabei über eine spektrale Bandbreite von ungefähr 11 nm (FWHM) bei einer Zentralwellenlänge von 1045 nm. Die Spitzenleistung beträgt beispielsweise 150 mW. Pulsdauer, Pulsform und Repetitionsrate lassen sich ohne Auswirkung auf das Pulsspektrum frei wählen. Da die Superlumineszenzdiode 1 gemäß Figur 4 im Gegensatz zu einer Fabry-Perot-Laserdiode keine reflektierenden Endfacetten 8 aufweist, sondern z.B. mit einer Antireflexschicht versehen ist, stellen die Endfacetten 8 der Superlumineszenzdiode 1 keinen Resonator dar. Durch die fehlende optische Rückkopplung wird das Einsetzen von Laseremission verhindert, so dass sich einzelne Longitudinalmoden nicht ausbilden können. Aufgrund der hohen Kleinsignalverstärkung im aktiven Halbleiterschichtsystem der Superlumineszenzdiode 1 wird die spontane Emission verstärkt und verlässt aufgrund der Wellenleitereigenschaften des Halbleiterschichtsystems die Superlumineszenzdiode 1 als beugungsbegrenzter Strahl, dessen Spektrum nur durch die Verstärkungsbandbreite des Halbleiterschichtsystems und den Effekt des Gain Narrowings bestimmt wird. Das von der Superlumineszenzdiode 1 emittierte Licht ist aufgrund der anisotropen Struktur des Halbleiterschichtsystems linear polarisiert und kann in eine polarisationserhaltende Single-Mode-Faser (nicht dargestellt) eingekoppelt werden. Anschließend wird das Licht mit Hilfe der Isolatoren 2 und/oder Bandpassfilter 3 in Bezug auf die spektrale Bandbreite oder den Polarisationszustand angepasst. Ebenso kann eine unerwünschte verstärkte Spontanemission herausgefiltert werden. Innerhalb des nachfolgenden optischen Verstärkers 4 werden die optischen Pulse verstärkt, ohne dass es aufgrund einzelner Longitudinalmoden mit hoher spektraler Intensität zum Einsetzen stimulierter Brillouin-Streuung kommt. Nach Passieren des optischen Verstärkers 4 kann die verstärkte Strahlung wahlweise weitere hintereinander angeordnete Polarisationsfilter 2 / Spektralfilter 3 und optische Verstärker 4 durchlaufen.

Die Ausführungsvariante des Faserverstärkersystems gemäß den Figuren 2 und 3 funktioniert so, dass die von der Superlumineszenzdiode 1 emittierte Strahlung zuerst einen Zirkulator 5 durchläuft, mit dessen Hilfe die emittierte Strahlung in einen Faserverstärker 4 gelangt. Von dort gelangt die verstärkte Strahlung auf ein Spektralgitter 6, 7, welches eine spektrale Filterfunktion aufweist und die auftreffende Strahlung in den Faserverstärker 4 zurückreflektiert. Hierbei wird die Strahlung innerhalb des Faserverstärkers 4 ein weiteres Mal verstärkt, durchläuft anschließend den Zirkulator 5 und verlässt diesen über einen separaten Ausgang, so dass die zweifach verstärkte Strahlung nicht in die Superlumineszenzdiode 1 zurückreflektiert wird. Das Spektralgitter 6, 7 kann wahlweise ein Faser-Bragg-Gitter 6 (gemäß Figur 2) oder ein durchstimmbares Gitter 7 (gemäß Figur 3) sein.

## Patentansprüche

1. Faserverstärkersystem zur Verstärkung und Emission gepulster Strahlung, aufweisend eine Masterquelle (1), die gepulste Ausgangsstrahlung emittiert, und mindestens eine in Strahlrichtung hinter der Masterquelle (1) angeordnete Verstärkerstufe (4), die die Ausgangsstrahlung verstärkt, wobei die von der Masterquelle (1) emittierte Ausgangsstrahlung breitbandig ist, d.h. eine spektrale Bandbreite im Bereich von 10 nm aufweist zur Vermeidung von stimulierter Brillouin-Streuung in der Verstärkerstufe, und durch spontane Emission erzeugt ist, wobei die Masterquelle (1) eine LED ist, nämlich eine Superlumineszenzdiode (SLD), deren Endfacetten (8) eine Antireflexbeschichtung aufweisen.

2. Faserverstärkersystem nach Anspruch 1, **dadurch gekennzeichnet, dass** die Masterquelle (1) eine LED ist, wobei die Flächennormale wenigstens einer Endfacette (8) gegenüber der Strahlrichtung einen von 0° abweichenden Winkel aufweist.

3. Faserverstärkersystem nach einem der Anspruch 1 oder 2, **dadurch gekennzeichnet, dass** vor und/oder hinter der Verstärkerstufe (4) ein filterndes Element angeordnet ist.

4. Faserverstärkersystem nach Anspruch 3, **dadurch gekennzeichnet, dass** das filternde Element ein Spektralfilter (3) oder ein Polarisationsfilter (2) ist.

5. Faserverstärkersystem nach einem der Ansprüche 1 bis 4, **dadurch gekennzeichnet, dass** die Verstärkerstufe (4) mehrmals von der Strahlung durchlaufen wird.

6. Faserverstärkersystem nach Anspruch 5, **dadurch**

**gekennzeichnet, dass** vor der Verstärkerstufe (4) ein Zirkulator (5) angeordnet ist, welchem in Strahlrichtung hinter der Verstärkerstufe (4) ein Spektralgitter (6, 7) zugeordnet ist.

7. Faserverstärkersystem nach Anspruch 6, **dadurch gekennzeichnet, dass** das Spektralgitter (6, 7) ein Faser-Bragg-Gitter (6) oder ein durchstimmbares Gitter (7) ist.

8. Faserverstärkersystem nach einem der Ansprüche 1 bis 7, **dadurch gekennzeichnet, dass** die Verstärkerstufe (4) ein Wellenleiter ist.

9. Verfahren zur Verstärkung und Emission gepulster Laserstrahlung, wobei gepulste Ausgangsstrahlung einer Masterquelle (1) mittels mindestens einer Verstärkerstufe (4) verstärkt wird,
wobei die Masterquelle (1) eine breitbandige, durch spontane Emission erzeugte Ausgangsstrahlung emittiert, wobei die spektrale Bandbreite der Ausgangsstrahlung im Bereich von 10 nm liegt zur Vermeidung von stimulierter Brillouin-Streuung in der Verstärkerstufe,
wobei die Masterquelle (1) eine LED ist, nämlich eine Superlumineszenzdiode (SLD), deren Endfacetten (8) eine Antireflexbeschichtung aufweisen.

10. Verwendung eines Faserverstärkersystems nach einem der Ansprüche 1 bis 8 für die nichtlineare Frequenzkonversion.

## Claims

1. Fibre amplifier system for amplifying and emitting pulsed radiation, comprising a master source (1) which emits pulsed output radiation, and at least one amplifier stage (4), which is arranged behind the master source (1) in the beam direction and amplifies the output radiation, wherein the output radiation emitted by the master source (1) is broadband, i.e. has a spectral bandwidth in the range of 10 nm to avoid stimulated Brillouin scattering in the amplifier stage, and is produced by spontaneous emission, wherein the master source (1) is an LED, namely a superluminescent diode (SLD), the end facets (8) of which have an anti-reflective coating.

2. Fibre amplifier system according to claim 1, **characterised in that** the master source (1) is an LED, wherein the surface normal of at least one end facet (8) has an angle deviating from 0° with respect to the beam direction.

3. Fibre amplifier system according to one of claim 1 or 2, **characterised in that** a filtering element is arranged in front of and/or behind the amplifier stage (4).

4. Fibre amplifier system according to claim 3, **characterised in that** the filtering element is a spectral filter (3) or a polarisation filter (2).

5. Fibre amplifier system according to any one of claims 1 to 4, **characterised in that** the radiation passes through the amplifier stage (4) multiple times.

6. Fibre amplifier system according to claim 5, **characterised in that** a circulator (5) is arranged in front of the amplifier stage (4), associated with which circulator in the beam direction behind the amplifier stage (4) is a spectral grating (6, 7).

7. Fibre amplifier system according to claim 6, **characterised in that** the spectral grating (6, 7) is a fibre Bragg grating (6) or a tunable grating (7).

8. Fibre amplifier system according to any one of claims 1 to 7, **characterised in that** the amplifier stage (4) is a waveguide.

9. Method for amplifying and emitting pulsed laser radiation, wherein pulsed output radiation of a master source (1) is amplified by means of at least one amplifier stage (4), wherein the master source (1) emits broadband output radiation produced by spontaneous emission, wherein the spectral bandwidth of the output radiation is in the range of 10 nm to avoid stimulated Brillouin scattering in the amplifier stage, wherein the master source (1) is an LED, namely a superluminescent diode (SLD), the end facets (8) of which have an anti-reflective coating.

10. Use of a fibre amplifier system according to any one of claims 1 to 8 for nonlinear frequency conversion.

## Revendications

1. Système d'amplification à fibres destiné à amplifier et émettre un rayonnement pulsé, présentant une source primaire (1), qui émet un rayonnement de départ pulsé, et au moins un étage d'amplification (4) disposé en aval de la source primaire (1) dans la direction du rayon, qui amplifie le rayonnement de départ, dans lequel le rayonnement de départ émis par la source primaire (1) est à large bande, en d'autres termes présente une largeur de bande spectrale dans la plage de 10 nm, pour éviter une diffusion Brillouin stimulée dans l'étage d'amplification, et est généré par une émission spontanée, dans lequel la source primaire (1) est une DEL, à savoir une diode superluminescente (SLD), dont les facettes d'extrémité (8) présentent un revêtement antireflet.

**2.** Système d'amplification à fibres selon la revendication 1, **caractérisé en ce que** la source primaire (1) est une DEL, dans lequel la normale de surface d'au moins une facette d'extrémité (8) présente par rapport au sens du rayon un angle divergeant de 0°.

**3.** Système d'amplification à fibres selon l'une quelconque des revendications 1 ou 2, **caractérisé en ce qu'**un élément filtrant est disposé en amont et/ou en aval de l'étage d'amplification (4).

**4.** Système d'amplification à fibres selon la revendication 3, **caractérisé en ce que** l'élément filtrant est un filtre spectral (3) ou un filtre de polarisation (2).

**5.** Système d'amplification à fibres selon l'une quelconque des revendications 1 à 4, **caractérisé en ce que** l'étage d'amplification (4) est traversé à maintes reprises par le rayonnement.

**6.** Système d'amplification à fibres selon la revendication 5, **caractérisé en ce qu'**est disposé en amont de l'étage d'amplification (4) un circulateur (5), auquel est associé un réseau spectral (6, 7) en aval de l'étage d'amplification (4) dans le sens de rayon.

**7.** Système d'amplification à fibres selon la revendication 6, **caractérisé en ce que** le réseau spectral (6, 7) est un réseau de Bragg sur fibre (6) ou un réseau accordable (7).

**8.** Système d'amplification à fibres selon l'une quelconque des revendications 1 à 7, **caractérisé en ce que** l'étage d'amplification (4) est un guide d'ondes.

**9.** Procédé destiné à amplifier et émettre un rayonnement laser pulsé, dans lequel le rayonnement de départ pulsé d'une source primaire (1) est amplifié au moyen d'au moins un étage d'amplification (4), dans lequel la source primaire (1) émet un rayonnement de départ à large bande généré par émission spontanée, dans lequel la largeur de bande spectrale du rayonnement de départ se situe dans la plage de 10 nm pour éviter une diffusion Brillouin stimulée dans l'étage d'amplification, dans lequel la source primaire (1) est une DEL, à savoir une diode superluminescente (SLD), dont les facettes d'extrémité (8) présentent un revêtement antireflet.

**10.** Utilisation d'un système d'amplification à fibres selon l'une quelconque des revendications 1 à 8 pour la conversion de fréquence non linéaire.

Fig. 1

Fig. 2

Fig. 3

Fig. 4

8

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 2318675 A1